# EUROPÄISCHE PATENTSCHRIFT

(11) **EP 4 183 030 B1**
(45) Veröffentlichungstag und Bekanntmachung des Hinweises auf die Patenterteilung: **27.05.2026**
(21) Anmeldenummer: 21735600.5
(22) Anmeldetag: 16.06.2021
(51) Int. Cl.: H02K 3/52, H02K 7/00

(54) **ROTOR FÜR EINE ROTIERENDE ELEKTRISCHE MASCHINE, ELEKTRISCHE MASCHINE**
ROTOR FOR A ROTATING ELECTRIC MACHINE, ELECTRIC MACHINE
ROTOR POUR MACHINE ÉLECTRIQUE TOURNANTE, MACHINE ÉLECTRIQUE

(30) Priorität: 17.07.2020 DE 102020208957
(43) Veröffentlichungstag der Anmeldung: 24.05.2023
(73) Patentinhaber: Schaeffler Technologies AG & Co. KG, 91074 Herzogenaurach (DE)
(72) Erfinder: VAN DE BERG, Jan-Andreas, 81737 München (DE); TREMMEL-BURIAN, Josef, 81737 München (DE)
(74) Vertreter: Schaeffler Technologies
(86) Internationale Anmeldenummer: PCT/EP2021/066290
(87) Internationale Veröffentlichungsnummer: WO 2022/012841

(56) Entgegenhaltungen:
- EP-A1- 1 494 335
- CN-A- 103 532 269
- US-A1- 2020 177 046

## Beschreibung

Die Erfindung betrifft einen Rotor für eine rotierende elektrische Maschine eines zumindest teilweise elektrisch angetriebenen Kraftfahrzeugs oder eines elektrisch angetriebenen Flugobjekts. Der Rotor weist eine Mehrzahl von Polzähnen auf, auf denen eine über einen Fremdstrom bestrombare Rotorwicklung angeordnet ist, wobei die Rotorwicklung über einen Nutkeil auf den Polzähnen in dessen Lage gesichert und/oder fixiert ist. Zudem betrifft die Erfindung eine elektrische Maschine mit dem erfindungsgemäßen Rotor.

In modernen Kraftfahrzeugen werden zunehmend Elektromotoren verbaut. Sie werden dabei insbesondere als im Antriebsstrang vollintegrierte Antriebsmotoren oder in Hybridanwendungen beispielsweise als Startergeneratoren oder Achsmotoren eingesetzt. Dabei kommen zum Teil fremderregte Synchronmaschinen zum Einsatz, die einen Rotor aus einem mit einer Erregerwicklung und/oder Rotorwicklung versehenen Blechpaket aufweisen. Bei derartigen Rotoren sind zwischen den bewickelten Polzähnen Nuten gebildet.

Im Betrieb treten sowohl bei Innen- als auch bei Außenläufern hohe Fliehkräfte auf, die die Erregerwicklung aus den Nuten ziehen können. Die Fliehkräfte sind von der Drehzahl und von dem Gewicht der Nutinnenkomponenten abhängig. Insbesondere bei hochdrehenden Maschinen wird die Wicklung daher nach der Montage zusätzlich gesichert. Dazu sind verschiedene Bindemittel bekannt, die als Tränkharze oder Vergussmassen eingesetzt werden.

Zusätzlich können Nutstopper oder Nutkeile eingesetzt werden, um ein Herausziehen der Wicklung aus der Nut zu verhindern. Ein Nutstopper ist beispielsweise aus der Druckschrift DE 28 17 951 A1 bekannt. Bei für Elektromotoren mit hoher Drehzahl (10 000 Umdrehungen pro Minute und mehr) ausgelegten Rotoren wäre es sinnvoll, die Nutinnenkomponenten, insbesondere die Erregerwicklung, noch wirksamer gegen im Betrieb auftretende Fliehkräfte zu sichern.

Die EP 1 494 335 A1 beschreibt eine Rotoranordnung mit einem mehrteiligen Nutkeil, dessen Verpannelemente über einen endseitig aufgebrachten Ring in Position gehalten werden.

Die US 2020 177 046 A1 beschreibt einen einteilig ausgebildeten Nutkeil.

Die Aufgabe der Erfindung liegt darin, einen Rotor für eine rotierende elektrische Maschine anzugeben, dessen Rotorwicklung auch bei hohen Drehzahlen lagesicher auf den Polzähnen angeordnet ist.

Diese Aufgabe wird durch den Gegenstand des unabhängigen Patentanspruchs gelöst. Bevorzugte Weiterbildungen der Erfindung sind in den Unteransprüchen und der nachstehenden Beschreibung angegeben, wobei jedes Merkmal sowohl einzeln als auch in Kombination einen Aspekt der Erfindung darstellen kann. Erfindungsgemäß ist ein Rotor für eine elektrische Maschine eines zumindest teilweise elektrisch angetriebenen Kraftfahrzeugs vorgesehen, aufweisend eine um eine Rotorachse rotierbare Rotorscheibe mit wenigstens zwei in radialer Richtung der Rotorscheibe nach außen gerichteter und in Umfangsrichtung der Rotorscheibe zueinander beabstandeter Polzähne, wobei jeder Polzahn einen Polhals und einen an den Polhals angrenzenden Polschuh aufweist, eine auf jedem Polhals angeordnete bestrombare Rotorwicklung, wobei zwischen der Rotorwicklung der zwei zueinander beabstandet angeordneten Polzähne eine Nut ausgebildet ist, einen in die Nut eingreifenden und gegen den Polschuh abstützenden mehrteiligen und sich selbstsichernden Nutkeil, wobei der Nutkeil in Folge einer Rotation des Rotors um dessen Rotorachse unter Fliehkrafteinfluss eine Anpresskraft in tangentialer Richtung auf die jeweilige an den Nutkeil anliegende Rotorwicklung ausübt und diese in dessen Lage auf dem Polhals sichert und/oder fixiert.

Mit anderen Worten ist es ein Aspekt der vorliegenden Erfindung, dass ein Rotor für eine elektrische Maschine angegeben wird. Die elektrische Maschine findet vorzugsweise Anwendung in einem Antriebsstrang eines zumindest teilweise elektrisch angetriebenen Kraftfahrzeugs. Denkbar ist jedoch auch, dass die elektrische Maschine in einer Antriebseinrichtung eines elektrisch angetriebenen Flugobjekts, beispielsweise einer Drohne, Anwendung findet.

Der Rotor weist eine Rotorachse auf, um die der Rotor drehbar und/oder rotierbar angeordnet bzw. gelagert ist. Weiterhin weist der Rotor eine Rotorscheibe auf, die auch als Blechpaket bezeichnet werden kann. Die Rotorscheibe wird vorzugsweise aus einer Mehrzahl von hintereinander angeordneten Blechen ausgebildet.

Denkbar ist jedoch auch, dass die Rotorscheibe und/oder das Blechpaket aus einem Stück ausgebildet ist. Die Rotorscheibe ist vorzugsweise ringförmig ausgebildet und weist auf ihrer in radialer Richtung nach außen gerichteten Außenseite wenigstens zwei in Umfangsrichtung des Rotors zueinander beabstandet angeordnete Polzähne auf. In der Regel weist der Rotor mehr als zwei Polzähne auf, die in regelmäßigen Abständen in Umfangsrichtung des Rotors zueinander beabstandet auf der Außenseite der ringförmig ausgebildeten Rotorscheibe ausgebildet sind.

Jeder Polzahn weist einen an die Außenseite angrenzenden Polhals und einen an den Polhals angrenzenden Polschuh auf. Der Polhals kann auch als Polschaft bezeichnet werden. Mit anderen Worten ist der Polhals zwischen der Außenseite der ringförmigen Rotorscheibe und dem Polschuh ausgebildet. Der Polzahn ist in der Regel hammerkopfförmig ausgebildet. Mit anderen Worten ist ein an den Polhals angrenzender Querschnitt des Polschuhs größer als ein Querschnitt des Polhalses. Auf dem Polhals ist eine bestrombare Rotorwicklung angeordnet. Eine Rotorwicklung ist auch unter dem Begriff Erregerwicklung bekannt.

Zwischen der Rotorwicklung der zwei zueinander beabstandet angeordneten Polzähne ist eine Nut ausgebildet. Die Nut kann eine V-förmige Ausgestaltung aufweisen und erstreckt sich vorzugsweise zwischen den Polzähnen bis auf die Außenseite der ringförmig ausgebildeten Rotorscheibe. In der Nut ist ein mehrteiliger und sich selbstsichernder Nutkeil angeordnet, wobei der Nutkeil in Folge einer Rotation des Rotors um dessen Rotorachse unter Fliehkrafteinfluss eine Anpresskraft auf die jeweilige an den Nutkeil anliegende Rotorwicklung ausübt und diese in dessen Lage auf dem Polhals fixiert und/oder positioniert. Selbstsichernd bedeutet, dass der Nutkeil sich unter Fliehkrafteinfluss in Folge einer Rotation des Rotors um dessen Rotorachse in der Nut verspannt, bzw. eine Verspannung des Nutkeils in der Nut erhöht wird, wodurch der Nutkeil lagesicher in der Nut angeordnet ist. Da die Anpresskraft des Nutkeils auf die Rotorwicklung im Zuge einer Rotation des Rotors um dessen Rotorachse ausgeübt wird, und diese bei hohen Drehzahlen verstärkt wird, kann auch bei hohen Drehzahlen des Rotors, vorzugsweise größer 10.000 U/min, eine sichere Lagefixierung der Rotorwicklung auf den Polzähnen ermöglicht werden.

Eine vorteilhafte Weiterbildung der Erfindung liegt darin, dass der Polschuh auf einer der Rotorachse zugewandten Seite eine Auflagefläche aufweist, und der Nutkeil sich zumindest abschnittsweise gegen diese Auflagefläche abstützt. Die Auflagefläche ist der Rotorachse und/oder der Außenseite der Rotorscheibe zugewandt und erstreckt sich von einem in tangentialer Richtung des Polschuhs ausgebildeten distalen Ende bis zu der auf dem Polhals angeordneten Rotorwicklung. Durch das Abstützen des Nutkeils gegen die Auflagefläche kann der Nutkeil in radialer Richtung lagesicher in der Nut fixiert werden.

In einer bevorzugten Weiterbildung der Erfindung ist vorgesehen, dass der Nutkeil einen V-förmig ausgebebildeten ersten Keil mit einer Spitze und zwei Stegen und einen zumindest teilweise zwischen den zwei Stegen angeordneten zweiten Keil mit einer Keilspitze aufweist, wobei die Spitze des V-förmigen ersten Keils in radialer Richtung der Rotorscheibe nach innen gerichtet ist, und die Keilspitze des zweiten Keils in radialer Richtung der Rotorscheibe nach außen zeigt, und der zweite Keil in radialer Richtung der Rotorscheibe zumindest teilweise verlagerbar angeordnet ist, die zwei Stege des V-förmigen ersten Keils mit ihrer Außenseite an der Rotorwicklung anliegen, und ein distales Ende der Stege des ersten Keils sich gegen die Auflagefläche in radialer Richtung nach außen abstützen, wobei der zweite Keil zwischen die Innenseiten der Stege geführt ist, und unter Fliehkrafteinfluss der zweite Keil eine Verlagerung in radialer Richtung der Rotorscheibe nach außen erfährt und dabei gegen die Innenseiten der Stege des ersten Keils wirkt und über die Außenseiten der Stege des V-förmigen ersten Keils eine Anpresskraft auf die Rotorwicklung ausübt.

Der erste Keil ist demnach V-förmig ausgebildet und weist zwei Stege auf, die sich in einem Punkt schneiden, bzw. in diesem Punkt zusammenlaufen. Der Punkt, in dem die zwei Stege zusammenlaufen, bildet die Spitze des V-förmigen ersten Keils aus, die in radialer Richtung der Rotorscheibe nach innen gerichtet ist. Die Stege weisen jeweils ein distales Ende auf, das der Spitze abgewandt ist. Das distale Ende der Stege liegt zumindest abschnittsweise an der Auflagefläche des Polschuhs an. Auf diese Weise sitzt der erste Keil, bezogen auf die radiale Richtung der Rotorscheibe, lagesicher in der Nut. Jeder Steg weist eine Außenseite auf, die der auf dem Polzahn angeordneten Rotorwicklung zugewandt ist und an der Rotorwicklung anliegt. Des Weiteren weist jeder Steg eine Innenseite auf. Die Innenseite der Stege ist einander zugewandt. Zwischen den Innenseiten der beiden Stege ist der zweite Keil in radialer Richtung der Rotorscheibe verlagerbar angeordnet. Die Keilspitze des zweiten Keils ist in radialer Richtung nach außen gerichtet ist. Der erste Keil und der zweite Keil stehen in Wirkverbindung zueinander, so dass bei einer Rotation des Rotors um dessen Rotorachse eine Verlagerung des zweiten Keils in radialer Richtung der Rotorscheibe erfolgt. Der zweite Keil wirkt gegen die Innenseite der Stege, wodurch der V-förmige erste Keil leicht gespreizt wird, und die Außenseite der Stege eine Anpresskraft auf die Rotorwicklung ausübt, um diese auf dem Polhals in dessen Lage zu sichern.

Die Anpresskraft wirkt erfindungsgemäß, bezogen auf eine in radialer Richtung der Rotorscheibe ausgebildete Symmetrieachse eines Polzahns in tangentialer Richtung der Rotorscheibe auf die Rotorwicklung.

In diesem Zusammenhang liegt eine vorteilhafte Weiterbildung der Erfindung darin, dass, bezogen auf den Querschnitt des Nutkeils, der Steg einen Abschnitt aufweist, dessen Wandstärke über die Längsrichtung des Stegs in Richtung des distalen Endes zunehmend ausgebildet ist, und eine Keilaußenfläche des zweiten Keils unter Fliehkrafteinfluss gegen den Abschnitt zumindest abschnittsweise anliegt und gegen diesen wirkt. Mit anderen Worten kann ein Zwischenraum des ersten Keils zwischen den Innenseiten der Stege eine in radialer Richtung der Rotorscheibe zulaufende Ausgestaltung aufweisen. Auf diese Weise ist auf der Innenseite der Stege eine Kontaktfläche ausgebildet, gegen die der zweite Keil bei einer Rotation des Rotors um dessen Rotorachse wirkt, um über die Stege eine Anpresskraft auf die Rotorwicklung auszuüben.

Weiterhin ist vorteilhaft vorgesehen, dass angrenzend an die in radialer Richtung nach außen ausgebildete Keilspitze des zweiten Keils eine Querschnittsaufweitung ausgebildet ist, die zumindest abschnittsweise auf den distalen Enden der Stege aufsitzt. Die Querschnittsaufweitung greift somit nicht in den Zwischenraum zwischen den Innenseiten der Stege ein, sondern liegt auf den distalen Enden der Stege zumindest abschnittsweise auf. Über die Querschnittsaufweitung kann dem zweiten Keil eine gewisse Richtung und/oder Lage innerhalb des Zwischenraums vorgebeben werden, so dass dieser bei einer Rotation des Rotors präzise auf die entsprechenden Kontaktstellen auf der Innenseite der Stege wirkt.

Vorteilhaft ist weiter vorgesehen, dass ein Abstand zwischen den Stegen im Bereich der distalen Enden kleiner ist, als eine größte Breite eines Bereichs des zweiten Keils, der innerhalb des Zwischenraums angeordnet ist. Auf diese Weise kann verhindert werden, dass der zweite Keil unter Fliehkrafteinfluss aus dem Zwischenraum des ersten Keils herausgleitet.

Weiterhin liegt eine vorteilhafte Weiterbildung der Erfindung darin, dass eine Breite der Querschnittsaufweitung des zweiten Keils, die nicht in den Innenraum des ersten Keils hineinragt, größer ist, als ein Abstand zwischen den Stegen im Bereich der distalen Enden. Somit kann sichergestellt werden, dass die Querschnittsaufweitung des zweiten Keils nicht in den Zwischenraum gelangt, sondern den Bereich des zweiten Keils innerhalb des Zwischenraums in dessen Lage entsprechend ausrichtet.

Grundsätzlich kann vorgesehen sein, dass der erste Keil und der zweite Keil aus unterschiedlichen Materialien ausgebildet sind. Denkbar ist, dass der erste Keil und der zweite Keil aus dem gleichen Material ausgebildet sein können. Vorzugsweise sind der erste Keil und der zweite Keil aus einem Kunststoff ausgebildet und/oder weisen zumindest abschnittsweise oder teilweise einen Kunststoff auf. Der Kunststoff erlaubt beispielsweise dem ersten Keil sich zu verformen, insbesondere zu spreizen, so dass dieser eine Anpresskraft auf die Rotorwicklung ausüben kann. Der Kunststoff ist vorzugsweise ein duroplastischer Kunststoff. Duroplastische Kunststoffe weisen eine erhöhte Temperaturbeständigkeit auf. Dies kann vorteilhaft für den Einsatz im Bereich von Statoren sein, da diese im Betrieb hohe Temperaturen aufweisen können
Alternativ zu der Ausgestaltung eines Nutkeils mit einem ersten Keil und einem zweiten Keil liegt eine vorteilhafte Weiterbildung der Erfindung darin, dass der Nutkeil ein erstes Anpresselement, ein zweites Anpresselement und ein Keilelement aufweist, wobei das erste Anpresselement und das zweite Anpresselement in tangentialer Richtung der Rotorscheibe verlagerbar ausgebildet sind, und das Keilelement in radialer Richtung verlagerbar angeordnet ist, das Keilelement mit dem ersten Anpresselement und dem zweiten Anpresselement in Wirkverbindung steht, so dass durch eine Rotation des Rotors um die Rotorachse das Keilelement in radialer Richtung der Rotorscheibe nach außen verlagert wird und gegen das erste Anpresselement und das zweite Anpresselement wirkt, wodurch diese in tangentialer Richtung der Rotorscheibe voneinander weg bewegt werden und eine Anpresskraft auf die Rotorwicklung ausüben, um diese auf dem jeweiligen Polzahn lagesicher zu positionieren und/oder zu fixieren.

Mit anderen Worten ist in der alternativen Ausgestaltung vorgesehen, dass der Nutkeil wenigstens dreistückig ausgebildet ist und ein erstes Anpresselement, ein zweitens Anpresselement und ein Keilelement aufweist. Das erste Anpresselement und das zweite Anpresselement sind in der Nut in tangentialer Richtung der Rotorscheibe zueinander verlagerbar angeordnet, wobei die beiden Anpresselemente jeweils eine Außenfläche aufweisen, die einander abgewandt und der jeweiligen Rotorwicklung zugewandt ist. Zwischen einer Außenseite der Rotorscheibe und den beiden Anpresselementen ist das Keilelement angeordnet, wobei eine Keilspitze des Keilelements in radialer Richtung der Rotorscheibe nach außengerichtet ist und zwischen das erste Anpresselement und das zweite Anpresselement bei einer Rotoration des Rotors um dessen Rotorachse wirkt. Dadurch werden die beiden Keilelemente in tangentialer Richtung der Rotorscheibe verlagert und über die Außenseite eine Anpresskraft auf die Rotorwicklung ausgeübt, um diese auf dem Polzahn in ihrer Lage zu sichern.

In diesem Zusammenhang liegt eine vorteilhafte Weiterbildung der Erfindung darin, dass das erste Anpresselement und das zweite Anpresselement zumindest abschnittsweise ineinandergreifen. Mit anderen Worten können das erste Anpresselement und das zweiten Anpresselement beispielsweise über eine Nut-Feder-Verbindung miteinander verbunden sein, die eine Verlagerung der beiden Anpresselemente in tangentialer Richtung der Rotorscheibe ermöglicht.

Weiter vorteilhaft ist vorgesehen, dass das erste Anpresselement und das zweite Anpresselement auf einer der Rotorachse zugewandten Seite eine Keilaufnahme ausbilden, und das Keilelement eine Keilspitze aufweist, die in radialer Richtung der Rotorscheibe nach außen gerichtet ist, und zumindest abschnittsweise in die Keilaufnahme eingreift. Die Keilaufnahme bildet somit eine Art Führung für das Keilelement aus, so dass dieses bei einer Verlagerung in radialer Richtung der Rotorscheibe effektiv und präzise gegen die beiden Anpresselemente wirkt, um diese in tangentialer Richtung der Rotorscheibe zu verlagern, um eine entsprechende Anpresskraft über die Anpresselemente und die jeweilige Außenfläche auf die Rotorwicklung auszuüben.

In einer bevorzugten Weiterbildung der Erfindung ist vorgesehen, dass sich das erste Anpresselement und/oder das zweite Anpresselement zumindest abschnittsweise an der Auflagefläche des Polzahns abstützt. Auf diese Weise können die Anpresselemente, bezogen auf deren Lage in radialer Richtung der Rotorscheibe innerhalb der Nut lagesicher angeordnet werden.

Grundsätzlich kann vorgesehen sein, dass der Rotor nur eine Rotorscheibe aufweist. Eine vorteilhafte Weiterbildung der Erfindung liegt darin, dass der Rotor eine Mehrzahl von Rotorscheiben aufweist, die in axialer Richtung des Rotors schrägungsfrei hintereinander angeordnet sind.

Die Erfindung betrifft zudem eine elektrische Maschine mit dem erfindungsgemäßen Rotor. Die elektrische Maschine ist vorzugsweise eine Antriebseinrichtung oder ein Generator. Besonders vorteilhaft wird die elektrische Maschine in einem Antriebsstrang eines zumindest teilweise elektrisch angetriebenen Kraftfahrzeugs angeordnet. Denkbar ist jedoch auch, dass die elektrische Maschine in einer Antriebseinrichtung eines elektrisch angetriebenen Flugobjekts, beispielsweise einer Drohne, Anwendung findet.

Weitere Merkmale und Vorteile der vorliegenden Erfindung ergeben sich aus den Unteransprüchen sowie den nachfolgenden Ausführungsbeispielen.

Die Ausführungsbeispiele sind nicht einschränkend, sondern vielmehr als beispielhaft zu verstehen. Sie sollen den Fachmann in die Lage versetzen, die Erfindung auszuführen. Die Anmelderin behält sich vor, einzelne und/oder mehrere der in den Ausführungsbeispielen offenbarten Merkmale zum Gegenstand von Patentansprüchen zu machen oder solche Merkmale in bestehende Patentansprüche aufzunehmen. Die Ausführungsbeispiele werden anhand von Zeichnungen näher erläutert.

**In** diesen zeigen:
- Fig. 1: eine dreidimensionale Ansicht eines Rotors gemäß einem Ausführungsbeispiel der Erfindung;
- Fig. 2: einen Querschnitt durch den Rotor gemäß dem bevorzugten Ausführungsbeispiel der Erfindung;
- Fig. 3: eine Detailansicht eines Nutkeils in einer ersten bevorzugten Ausgestaltung der Erfindung;
- Fig. 4: eine Detailansicht eines Nutkeils in einer zweiten bevorzugten Ausgestaltung der Erfindung.

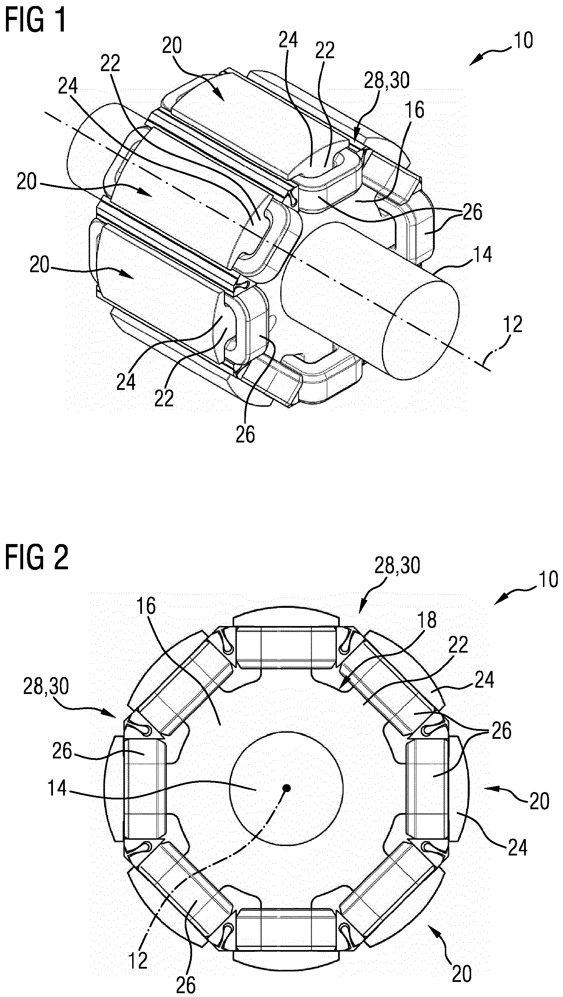

In Fig. 1 ist eine dreidimensionale Ansicht eines Rotors 10 für eine elektrische Maschine gezeigt. Die elektrische Maschine findet vorzugsweise Anwendung in einem Antriebsstrang eines zumindest teilweise elektrisch angetriebenen Kraftfahrzeugs. In Fig. 2 ist ein Querschnitt durch den Rotor 10 gezeigt.

Nachstehend wird auf die Fig. 1 und 2 gleichzeitig Bezug genommen. Der Rotor 10 weist eine um eine Rotorachse 12 rotierbare Rotorwelle 14 auf. Auf der Rotorwelle 14 ist wenigstens eine Rotorscheibe 16 drehfest angeordnet. Drehfest bedeutet, dass im Zuge einer Rotation des Rotors 10 um die Rotorachse 12, die Rotorscheibe 16 keine Relativverdrehung in Umfangsrichtung des Rotors 10 zur Rotorwelle 14 erfährt.

Die Rotorscheibe 16 kann auch als Blechpaket bezeichnet werden. Für gewöhnlich weist die Rotorscheibe 16 eine Mehrzahl von hintereinander angeordneten Blechen auf. Die Rotorscheibe 16 ist ringförmig ausgebildet und weist auf ihrer in radialer Richtung nach außen gerichteten Außenseite 18 wenigstens zwei in Umfangsrichtung des Rotors 10 zueinander beabstandet angeordnete Polzähne 20 auf. In der Regel weist der Rotor 10, wie auch in Fig. 1 gezeigt, mehr als zwei Polzähne 20 auf, die in Umfangsrichtung des Rotors 10 in regelmäßigen Abständen zueinander beabstandet auf der Außenseite 18 der ringförmig ausgebildeten Rotorscheibe 16 ausgebildet sind.

Vorzugsweise sind die Rotorscheibe 16 und die Polzähne 20 einstückig ausgebildet. Dies bedeutet, dass ein Blech eine ringförmige Ausgestaltung aufweist und die Polzähne 20 daran angeordnet sind. Beispielsweise wird so ein Blech mit den Polzähnen 20 durch einen Stanzvorgang hergestellt.

Jeder Polzahn 20 weist einen an die Außenseite 18 angrenzenden Polhals 22 und einen an den Polhals 22 angrenzenden Polschuh 24 auf. Mit anderen Worten ist der Polhals 22 zwischen der Außenseite 18 der ringförmigen Rotorscheibe 16 und dem Polschuh 24 ausgebildet. Der Polzahn 20 ist hammerkopfförmig ausgebildet. Somit ist ein an den Polhals 22 angrenzender Querschnitt des Polschuhs 24 größer als ein Querschnitt des Polhalses 22. Auf dem Polhals 22 ist eine bestrombare Rotorwicklung 26 angeordnet und/oder aufgewickelt.

Zwischen der Rotorwicklung 26 der zwei zueinander beabstandet angeordneten Polzähne 30 ist eine Nut 28 ausgebildet. Die Nut 28 weist eine V-förmige Ausgestaltung auf und erstreckt sich zwischen den Polzähnen 20 bis auf die Außenseite 18 der ringförmigen Rotorscheibe 16. In der Nut 28 ist zumindest abschnittsweise ein mehrteiliger und sich selbstsichernder Nutkeil 30 angeordnet, wobei der Nutkeil 30 in Folge einer Rotation des Rotors 10 um dessen Rotorachse 12 unter Fliehkrafteinfluss 31 eine Anpresskraft 48 auf die jeweilige an den Nutkeil 30 anliegende Rotorwicklung 26 ausübt und diese in dessen Lage auf dem Polhals 22 fixiert. Da die Anpresskraft 48 des Nutkeils 30 auf die Rotorwicklung 26 im Zuge einer Rotation des Rotors 10 um dessen Rotorachse 12 ausgeübt wird, und diese bei hohen Drehzahlen verstärkt wird, kann auch bei hohen Drehzahlen des Rotors 10, vorzugsweise größer 10.000 U/min, eine sichere Lagefixierung des Rotorwicklung 26 auf den Polzähnen 20 ermöglicht werden.

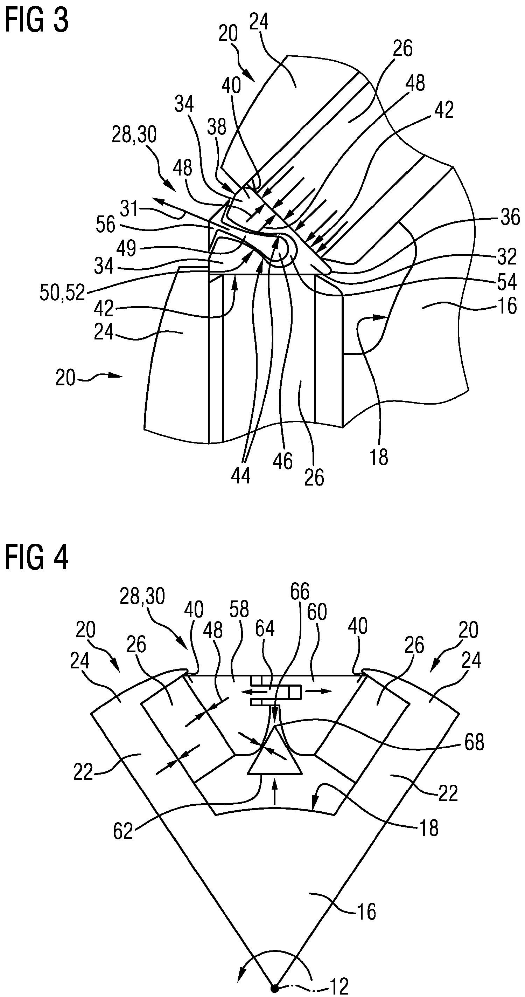

In Fig. 3 ist eine Detailansicht der Rotorscheibe 16 im Bereich der Nut 28 bzw. des Nutkeils 30 gezeigt. Der Nutkeil 30 ist in einer ersten bevorzugten Ausgestaltung dargestellt. Demnach weist der Nutkeil 30 einen ersten V-förmig ausgebildeten ersten Keil 32 auf. Der erste Keil 32 wird durch zwei Stege 34 ausgebildet, die sich in einem Punkt schneiden, bzw. in diesem Punkt zusammenlaufen. Der Punkt, in dem die zwei Stege 34 zusammenlaufen, bildet die Spitze 36 des V-förmigen ersten Keils 32. Die Spitze 36 ist in radialer Richtung der Rotorscheibe 16 nach innen gerichtet. Die Stege 34 weisen jeweils ein distales Ende 38 auf, das der Spitze 36 abgewandt ist. Das distale Ende 38 der Stege 34 liegt zumindest abschnittsweise an einer Auflagefläche 40 des Polschuhs 24 an. Die Auflagefläche 40 ist auf einer der Rotorachse 12 zugewandten Seite des Polschuhs 24 ausgebildet und erstreckt sich von einem distalen Ende des Polschuhs 24, bezogen auf eine tangentiale Richtung der Rotorscheibe 16, bis zu der auf dem Polhals 22 angeordneten Rotorwicklung 26. Auf diese Weise sitzt der erste Keil 32 lagesicher in der Nut 28. Jeder Steg 34 weist eine Außenseite 42 auf, die der auf dem Polzahn 20 angeordneten Rotorwicklung 26 zugewandt ist und an der Rotorwicklung 26 anliegt. Des Weiteren weist jeder Steg 34 eine Innenseite 44 auf. Die Innenseite 44 der Stege 34 ist einander zugewandt. Zwischen den Innenseiten 44 der beiden Stege 34 ist der zweite Keil 46 in radialer Richtung der Rotorscheibe 16 verlagerbar angeordnet. Die Keilspitze 49 des zweiten Keils 46 ist in radialer Richtung nach außen gerichtet. Der erste Keil 32 und der zweite Keil 46 stehen in Wirkverbindung zueinander, so dass bei einer Rotation des Rotors 10 um dessen Rotorachse 12 eine Verlagerung des zweiten Keils 46 in radialer Richtung der Rotorscheibe 16 erfolgt. Der zweite Keil 46 wirkt zumindest abschnittsweise gegen die Innenseite 44 der Stege 34, wobei die Stege 34 gespreizt werden, so dass die Außenseite 42 der Stege 34 eine Anpresskraft 48 auf die Rotorwicklung 26 ausübt, um diese auf dem Polhals 22 in dessen Lage fixiert.

Bezogen auf den Querschnitt des Nutkeils 30 weisen die Stege 34 jeweils einen Abschnitt 50 auf, dessen Wandstärke über die Längsrichtung des Stegs 34 in Richtung des distalen Endes 38 zunehmend ausgebildet ist, und eine Keilaußenfläche 52 des zweiten Keils 46 unter Fliehkrafteinfluss 31 gegen den Abschnitt 50 zumindest abschnittsweise anliegt und gegen diesen wirkt. Mit anderen Worten kann ein Zwischenraum 54 des ersten Keils 32 zwischen den Innenseiten 44 der Stege 34 eine zulaufende Ausgestaltung aufweisen, bezogen auf eine radiale Richtung der Rotorscheibe 16, die nach außen gerichtet ist. Auf diese Weise ist auf der Innenseite 44 der Stege 34 eine Kontaktfläche ausgebildet, gegen die der zweite Keil 46 bei einer Rotation des Rotors 10 um dessen Rotorachse 12 wirkt, um über die Stege 34 die Anpresskraft 48 auf die Rotorwicklung 26 auszuüben.

An die in radialer Richtung nach außen ausgebildete Keilspitze 49 des zweiten Keils 46 ist eine Querschnittsaufweitung 56 ausgebildet ist, die zumindest abschnittsweise auf den distalen Enden 38 der Stege 34 aufsitzt. Die Querschnittsaufweitung 56 greift somit nicht in den Zwischenraum 54 zwischen den Innenseiten 44 der Stege 34 ein, sondern liegt auf den distalen Enden 38 der Stege 34 zumindest abschnittsweise auf. Über die Querschnittsaufweitung 56 kann dem zweiten Keil 46 eine gewisse Richtung und/oder Lage innerhalb des Zwischenraums 54 vorgebeben werden, so dass dieser bei einer Rotation des Rotors 10 präzise auf die entsprechenden Kontaktstellen auf der Innenseite 44 der Stege 34 wirkt.

In Fig. 4 ist eine Detailansicht der Rotorscheibe 16 im Bereich der Nut 28 bzw. des Nutkeils 30 gezeigt. Der Nutkeil 30 ist in einer zweiten bevorzugen Ausgestaltung dargestellt. Der Nutkeil 30 weist ein erstes Anpresselement 58, ein zweites Anpresselement 60 und ein Keilelement 62 auf. Das erste Anpresselement 58 und das zweite Anpresselement 60 sind in tangentialer Richtung der Rotorscheibe 16 verlagerbar ausgebildet. Das Keilelement 62 ist in radialer Richtung der Rotorscheibe 16 verlagerbar angeordnet, wobei das Keilelement 62 mit dem ersten Anpresselement 58 und dem zweiten Anpresselement 60 in Wirkverbindung steht, so dass durch eine Rotation des Rotors 10 um die Rotorachse 12 das Keilelement 62 in radialer Richtung der Rotorscheibe 16 nach außen verlagert wird und gegen das erste Anpresselement 58 und das zweite Anpresselement 60 wirkt, wodurch diese in tangentialer Richtung der Rotorscheibe 16 voneinander weg bewegt werden und eine Anpresskraft 48 auf die Rotorwicklung 26 ausüben, um diese auf dem Polzahn in ihrer Lage zu sichern.

Das erste Anpresselement 58 und das zweite Anpresselement 60 greifen zumindest abschnittsweise ineinander. Beispielsweise sind das erste Anpresselement 58 und das zweiten Anpresselement 60 über eine Nut-Feder-Verbindung 64 miteinander verbunden, die eine Verlagerung der beiden Anpresselemente 58, 60 in tangentialer Richtung der Rotorscheibe 16 ermöglicht.

Weiterhin ist vorgesehen, dass das erste Anpresselement 58 und das zweite Anpresselement 60 auf einer der Rotorachse 12 zugewandten Seite eine Keilaufnahme 66 ausbilden, und das Keilelement 62 eine Keilspitze 68 aufweist, die in radialer Richtung der Rotorscheibe 16 nach außen gerichtet ist, und zumindest abschnittsweise in die Keilaufnahme 66 eingreift. Die Keilaufnahme 66 bildet somit eine Art Führung für das Keilelement 62 aus, so dass dieses bei einer Verlagerung in radialer Richtung der Rotorscheibe 16 effektiv und präzise gegen die beiden Anpresselemente 58, 60 wirkt, um diese in tangentialer Richtung der Rotorscheibe 16 zu verlagern bzw. eine entsprechende Anpresskraft 48 über die Anpresselemente 58, 60 auf die Rotorwicklung 26 auszuüben.

## Patentansprüche

1. Rotor (10) für eine elektrische Maschine eines zumindest teilweise elektrisch angetriebenen Kraftfahrzeugs, aufweisend
eine um eine Rotorachse (12) rotierbare Rotorscheibe (16) mit wenigstens zwei in radialer Richtung der Rotorscheibe (16) nach außen gerichteter und in Umfangsrichtung der Rotorscheibe (16) zueinander beabstandeter Polzähne (20), wobei jeder Polzahn (20) einen Polhals (22) und einen an den Polhals (22) angrenzenden Polschuh (24) aufweist,
eine auf jedem Polhals (22) angeordnete bestrombare Rotorwicklung (26), wobei zwischen der Rotorwicklung (26) der zwei zueinander beabstandet angeordneten Polzähne (20) eine Nut (28) ausgebildet ist,
einen in die Nut (28) eingreifenden und gegen den Polschuh (24) abstützenden mehrteiligen und sich selbstsichernden Nutkeil (30), wobei der Nutkeil (30) in Folge einer Rotation des Rotors (10) um dessen Rotorachse (12) unter Fliehkrafteinfluss (31) eine Anpresskraft (48) in tangentialer Richtung auf die jeweilige an den Nutkeil (30) anliegende Rotorwicklung (26) ausübt und diese in dessen Lage auf dem Polhals (22) sichert und/oder fixiert.

2. Rotor nach Anspruch 1, **dadurch gekennzeichnet, dass** der Polschuh (24) auf einer der Rotorachse (12) zugewandten Seite eine Auflagefläche (40) aufweist, und der Nutkeil (30) sich zumindest abschnittsweise gegen diese Auflagefläche (40) abstützt.

3. Rotor nach Anspruch 1 oder 2, **dadurch gekennzeichnet, dass** der Nutkeil (30) einen V-förmig ausgebebildeten ersten Keil (32) mit einer Spitze (36) und zwei Stegen (34) und
einen zumindest teilweise zwischen den zwei Stegen (34) angeordneten zweiten Keil (46) mit einer Keilspitze (49) aufweist, wobei
die Spitze (36) des V-förmigen ersten Keils (32) in radialer Richtung der Rotorscheibe (16) nach innen gerichtet ist, und
die Keilspitze (49) des zweiten Keils (46) in radialer Richtung der Rotorscheibe (16) nach außen zeigt, und
der zweite Keil (46) in radialer Richtung der Rotorscheibe (16) zumindest teilweise verlagerbar angeordnet ist,
die zwei Stege (34) des V-förmigen ersten Keils (32) mit ihrer Außenseite (42) an der Rotorwicklung (26) anliegen, und
ein distales Ende (38) der Stege (34) des ersten Keils (32) sich gegen die Auflagefläche (40) in radialer Richtung nach außen abstützt, wobei der zweite Keil (46) zwischen die Innenseiten (44) der Stege (34) geführt ist, und unter Fliehkrafteinfluss (31) der zweite Keil (46) eine Verlagerung in radialer Richtung der Rotorscheibe (16) nach außen erfährt und dabei gegen die Innenseiten (44) der Stege des ersten Keils (32) wirkt und über die Außenseiten (42) der Stege (34) des V-förmigen ersten Keils (32) eine Anpresskraft (48) auf die Rotorwicklung (26) ausübt.

4. Rotor nach Anspruch 3, **dadurch gekennzeichnet, dass**, bezogen auf den Querschnitt des Nutkeils (30), der Steg (34) einen Abschnitt (50) aufweist, dessen Wandstärke über die Längsrichtung des Stegs (34) in Richtung des distalen Endes (38) zunehmend ausgebildet ist, und eine Keilaußenfläche (52) des zweiten Keils (46) unter Fliehkrafteinfluss (31) gegen den Abschnitt (50) zumindest abschnittsweise anliegt und gegen diesen wirkt.

5. Rotor nach einem der Ansprüche 3 oder 4, **dadurch gekennzeichnet, dass** angrenzend an die in radialer Richtung nach außen ausgebildete Keilspitze (49) des zweiten Keils (46) eine Querschnittsaufweitung (56) ausgebildet ist, die zumindest abschnittsweise auf den distalen Enden (38) der Stege (34) aufsitzt.

6. Rotor nach Anspruch 1 oder 2, **dadurch gekennzeichnet, dass** der Nutkeil (30) ein erstes Anpresselement (58), ein zweites Anpresselement (60) und ein Keilelement (62) aufweist, wobei das erste Anpresselement (58) und das zweite Anpresselement (60) in tangentialer Richtung der Rotorscheibe (16) verlagerbar ausgebildet sind, und das Keilelement (62) in radialer Richtung verlagerbar angeordnet ist, das Keilelement (62) mit dem ersten Anpresselement (58) und dem zweiten Anpresselement (60) in Wirkverbindung steht, so dass durch eine Rotation des Rotors (10) um die Rotorachse (12) das Keilelement (62) in radialer Richtung der Rotorscheibe (16) nach außen verlagert wird und gegen das erste Anpresselement (58) und das zweite Anpresselement (60) wirkt, wodurch diese in tangentialer Richtung der Rotorscheibe (16) voneinander weg bewegt werden und eine Anpresskraft (48) auf die Rotorwicklung (26) ausüben, um diese auf dem jeweiligen Polzahn (20) in ihrer Lage zu sichern.

7. Rotor nach Anspruch 6, **dadurch gekennzeichnet, dass** das erste Anpresselement (58) und das zweite Anpresselement (60) zumindest abschnittsweise ineinandergreifen.

8. Rotor nach Ansprüche 6 oder 7, **dadurch gekennzeichnet, dass** das erste Anpresselement (58) und das zweite Anpresselement (60) auf einer der Rotorachse (12) zugewandten Seite eine Keilaufnahme (66) ausbilden, und das Keilelement (62) eine Keilspitze (68) aufweist, die in radialer Richtung der Rotorscheibe (16) nach außen gerichtet ist, und zumindest abschnittsweise in die Keilaufnahme (66) eingreift.

9. Rotor nach einem der Ansprüche 6 bis 8, **dadurch gekennzeichnet, dass** sich das erste Anpresselement (58) und/oder das zweite Anpresselement (60) zumindest abschnittsweise an der Auflagefläche (40) des Polschuhs (24) abstützt.

10. Rotor nach einem der vorstehenden Ansprüche, **dadurch gekennzeichnet, dass** der Rotor (10) eine Mehrzahl von Rotorscheiben (16) aufweist, die in axialer Richtung des Rotors (10) schrägungsfrei hintereinander angeordnet sind.

11. Elektrische Maschine mit einem Rotor (10) nach einem der vorstehenden Ansprüche.

## Claims

1. Rotor (10) for an electric machine of an at least partially electrically driven motor vehicle, having a rotor disc (16) which can be rotated about a rotor axis (12) and has at least two pole teeth (20) which are directed outwards in the radial direction of the rotor disc (16) and spaced apart from each other in the circumferential direction of the rotor disc (16), wherein each pole tooth (20) has a pole neck (22) and a pole shoe (24) adjoining the pole neck (22),
an energizable rotor winding (26) arranged on each pole neck (22), wherein a groove (28) is formed between the rotor winding (26) of the two pole teeth (20) arranged spaced apart from each other,
a multipart and self-locking groove wedge (30) engaging in the groove (28) and supported against the pole shoe (24), wherein the groove wedge (30), as a result of rotation of the rotor (10) about its rotor axis (12) under the influence of centrifugal force (31), exerts a contact-pressure force (48) in the tangential direction onto the respective rotor winding (26) bearing against the groove wedge (30) and secures and/or fixes the rotor winding in its position on the pole neck (22).

2. Rotor according to Claim 1, **characterized in that** the pole shoe (24) has a bearing surface (40) on a side facing the rotor axis (12), and the groove wedge (30) is supported against this bearing surface (40) at least in sections.

3. Rotor according to Claim 1 or 2, **characterized in that**
the groove wedge (30) has a V-shaped first wedge (32) having a tip (36) and two webs (34) and
a second wedge (46) arranged at least partially between the two webs (34) and having a wedge tip (49), wherein the tip (36) of the V-shaped first wedge (32) is directed inwards in the radial direction of the rotor disc (16), and
the wedge tip (49) of the second wedge (46) faces outward in the radial direction of the rotor disc (16), and
the second wedge (46) is arranged at least partially displaceably in the radial direction of the rotor disc (16),
the two webs (34) of the V-shaped first wedge (32) bear against the rotor winding (26) by way of their outer side (42), and
a distal end (38) of the webs (34) of the first wedge (32) is supported against the bearing surface (40) outwards in the radial direction, wherein
the second wedge (46) is guided between the inner sides (44) of the webs (34), and under the influence of centrifugal force (31) the second wedge (46) is displaced outwards in the radial direction of the rotor disc (16) and in so doing acts against the inner sides (44) of the webs of the first wedge (32) and exerts a contact-pressure force (48) onto the rotor winding (26) via the outer sides (42) of the webs (34) of the V-shaped first wedge (32).

4. Rotor according to Claim 3, **characterized in that**, based on the cross section of the groove wedge (30), the web (34) has a section (50), the wall thickness of which is designed to increase over the longitudinal direction of the web (34) in the direction of the distal end (38), and a wedge outer surface (52) of the second wedge (46) bears against the section (50) under the influence of centrifugal force (31) at least in sections and acts against the section.

5. Rotor according to either of Claims 3 or 4, **characterized in that** a cross-sectional widened portion (56), which sits on the distal ends (38) of the webs (34) at least in sections, is formed adjoining the wedge tip (49) of the second wedge (46) formed outwards in the radial direction.

6. Rotor according to Claim 1 or 2, **characterized in that** the groove wedge (30) has a first contact-pressure element (58), a second contact-pressure element (60) and a wedge element (62), wherein the first contact-pressure element (58) and the second contact-pressure element (60) are arranged displaceably in the tangential direction of the rotor disc (16), and the wedge element (62) is arranged displaceably in the radial direction, the wedge element (62) is operatively connected to the first contact-pressure element (58) and the second contact-pressure element (60), so that, owing to rotation of the rotor (10) about the rotor axis (12), the wedge element (62) is displaced outwards in the radial direction of the rotor disc (16) and acts against the first contact-pressure element (58) and the second contact-pressure element (60), as a result of which the first and the second contact-pressure element are moved away from each other in the tangential direction of the rotor disc (16) and exert a contact-pressure force (48) onto the rotor winding (26) in order to secure the rotor winding on the respective pole tooth (20) in its position.

7. Rotor according to Claim 6, **characterized in that** the first contact-pressure element (58) and the second contact-pressure element (60) interengage at least in sections.

8. Rotor according to Claim 6 or 7, **characterized in that** the first contact-pressure element (58) and the second contact-pressure element (60) form a wedge receptacle (66) on a side facing the rotor axis (12), and the wedge element (62) has a wedge tip (68) which is directed outwards in the radial direction of the rotor disc (16), and engages into the wedge receptacle (66) at least in sections.

9. Rotor according to any of Claims 6 to 8, **characterized in that** the first contact-pressure element (58) and/or the second contact-pressure element (60) are/is supported on the bearing surface (40) of the pole shoe (24) at least in sections.

10. Rotor according to any of the preceding claims, **characterized in that** the rotor (10) has a plurality of rotor discs (16), which are arranged in succession in the axial direction of the rotor (10) without skewing.

11. Electric machine with a rotor (10) according to one of the preceding claims.

## Revendications

1. Rotor (10) pour une machine électrique d'un véhicule à moteur à entraînement au moins partiellement électrique, présentant
un disque de rotor (16) pouvant tourner autour d'un axe de rotor (12), doté d'au moins deux dents polaires (20) dirigées vers l'extérieur dans la direction radiale du disque de rotor (16) et espacées les unes des autres dans la direction circonférentielle du disque de rotor (16), chaque dent polaire (20) présentant un corps de pôle (22) et un épanouissement polaire (24) adjacent au corps de pôle (22),
un enroulement rotorique (26) pouvant être parcouru par un courant, disposé sur chaque corps de pôle (22), une encoche (28) étant formée entre les enroulements rotoriques (26) des deux dents polaires (20) disposées de façon espacée l'une de l'autre,
une cale d'encoche (30) en plusieurs parties et autobloquante, s'engageant dans l'encoche (28) et s'appuyant contre l'épanouissement polaire (24), la cale d'encoche (30) exerçant, par suite d'une rotation du rotor (10) autour de son axe de rotor (12) sous l'effet de la force centrifuge (31), une force de pression (48) dans la direction tangentielle sur l'enroulement rotorique (26) respectivement adjacent à la cale d'encoche (30) et immobilisant et/ou fixant celui-ci dans sa position sur le corps de pôle (22).

2. Rotor selon la revendication 1, **caractérisé en ce que** l'épanouissement polaire (24) présente, sur un côté tourné vers l'axe de rotor (12), une surface d'appui (40), et la cale d'encoche (30) s'appuie au moins par sections contre cette surface d'appui (40).

3. Rotor selon la revendication 1 ou 2, **caractérisé en ce que**
la cale d'encoche (30) présente une première cale (32) réalisée en forme de V avec une pointe (36) et deux branches (34), et
une deuxième cale (46) disposée au moins partiellement entre les deux branches (34) et présentant une pointe de cale (49), dans lequel
la pointe (36) de la première cale (32) en forme de V est dirigée vers l'intérieur dans la direction radiale du disque de rotor (16), et
la pointe de cale (49) de la deuxième cale (46) est tournée vers l'extérieur dans la direction radiale du disque de rotor (16), et
la deuxième cale (46) est disposée de façon au moins partiellement déplaçable dans la direction radiale du disque de rotor (16),
les deux branches (34) de la première cale (32) en forme de V s'appliquent par leur côté extérieur (42) contre l'enroulement rotorique (26), et
une extrémité distale (38) des branches (34) de la première cale (32) s'appuie contre la surface d'appui (40) dans la direction radiale vers l'extérieur, dans lequel
la deuxième cale (46) est guidée entre les côtés intérieurs (44) des branches (34) et, sous l'effet de la force centrifuge (31), la deuxième cale (46) subit un déplacement vers l'extérieur dans la direction radiale du disque de rotor (16), agissant ainsi contre les côtés intérieurs (44) des branches de la première cale (32) et exerçant, par l'intermédiaire des côtés extérieurs (42) des branches (34) de la première cale (32) en forme de V, une force de pression (48) sur l'enroulement rotorique (26).

4. Rotor selon la revendication 3, **caractérisé en ce que**, par rapport à la section transversale de la cale d'encoche (30), la branche (34) présente une section (50) dont l'épaisseur de paroi est conçue de façon croissante suivant la direction longitudinale de la branche (34) vers l'extrémité distale (38), et une surface extérieure de cale (52) de la deuxième cale (46) s'applique, sous l'effet de la force centrifuge (31), au moins par sections contre la section (50) et agit contre celle-ci.

5. Rotor selon l'une quelconque des revendications 3 ou 4, **caractérisé en ce qu'**un élargissement de section transversale (56) est réalisé de façon adjacente à la pointe de cale (49) de la deuxième cale (46) formée vers l'extérieur dans la direction radiale, lequel élargissement repose au moins par sections sur les extrémités distales (38) des branches (34).

6. Rotor selon la revendication 1 ou 2, **caractérisé en ce que** la cale d'encoche (30) présente un premier élément de pression (58), un deuxième élément de pression (60) et un élément de cale (62), le premier élément de pression (58) et le deuxième élément de pression (60) étant conçus de façon déplaçable dans la direction tangentielle du disque de rotor (16), et l'élément de cale (62) étant disposé de façon déplaçable dans la direction radiale, l'élément de cale (62) étant en liaison cinématique avec le premier élément de pression (58) et le deuxième élément de pression (60), de sorte que, par une rotation du rotor (10) autour de l'axe de rotor (12), l'élément de cale (62) est déplacé vers l'extérieur dans la direction radiale du disque de rotor (16) et agit contre le premier élément de pression (58) et le deuxième élément de pression (60), ce par quoi ceux-ci sont écartés l'un de l'autre dans la direction tangentielle du disque de rotor (16) et exercent une force de pression (48) sur l'enroulement rotorique (26) afin d'immobiliser celui-ci dans sa position sur la dent polaire (20) respective.

7. Rotor selon la revendication 6, **caractérisé en ce que** le premier élément de pression (58) et le deuxième élément de pression (60) s'engagent l'un dans l'autre au moins par sections.

8. Rotor selon la revendication 6 ou 7, **caractérisé en ce que** le premier élément de pression (58) et le deuxième élément de pression (60) forment, sur un côté tourné vers l'axe de rotor (12), un logement de cale (66), et l'élément de cale (62) présente une pointe de cale (68) qui est dirigée vers l'extérieur dans la direction radiale du disque de rotor (16) et s'engage au moins par sections dans le logement de cale (66).

9. Rotor selon l'une quelconque des revendications 6 à 8, **caractérisé en ce que** le premier élément de pression (58) et/ou le deuxième élément de pression (60) s'appuient au moins par sections sur la surface d'appui (40) de l'épanouissement polaire (24).

10. Rotor selon l'une quelconque des revendications précédentes, **caractérisé en ce que** le rotor (10) présente une pluralité de disques de rotor (16) qui sont disposés les uns derrière les autres dans la direction axiale du rotor (10) sans inclinaison.

11. Machine électrique comprenant un rotor (10) selon l'une quelconque des revendications précédentes.
